# EUROPEAN PATENT SPECIFICATION

(11) **EP 4 227 037 B1**
(45) Date of publication and mention of the grant of the patent: **13.03.2024**
(21) Application number: 23169127.0
(22) Date of filing: 18.09.2020
(51) Int. Cl.: B23K 26/08, B23K 26/364, B23K 26/402, B29C 59/16, C08J 3/28, B23K 101/20, B23K 103/00

(54) **RESIN MOLDED ARTICLE HAVING MATTE SURFACE**
HARZFORMARTIKEL MIT MATTER OBERFLÄCHE
ARTICLE MOULÉ EN RÉSINE AYANT UNE SURFACE MATE

(30) Priority: 30.09.2019 JP 2019180140
(43) Date of publication of application: 16.08.2023
(62) Divisional of application: 20871591.2
(73) Proprietor: Polyplastics Co., Ltd., Tokyo 108-8280 (JP)
(72) Inventor: FUJITA, Takashi, Shizuoka 416-8533 (JP); KUSAGAYA, Mitsuharu, Shizuoka 416-8533 (JP)
(74) Representative: Maiwald GmbH

(56) References cited:
- JP-A- 2006 316 103
- US-A1- 2019 055 393

## Description

### Technical Field

The present invention relates to a resin molded article having a matte surface according to claim 1.

### Background Art

A light shielding member that blocks light from the outside is used for optical equipment such as an optical lens and a camera. In general, such as a light shielding member is subjected to low glossiness treatment by using a matte coating, a light shielding coating, or the like so as to suppress light reflection. It has been proposed that a light shielding member having a 60-degree glossiness of 2% or less be used, which is measured by, for example, a measurement method specified in JIS-Z-8741 (see Patent Literature 1).

As a method for subjecting a resin molded article to low glossiness treatment, there have been known a method in which a matte coating, a light shielding coating, or the like is used (see Patent Literature 2), a method in which a metal die is subjected to fine emboss processing and an embossment is transferred onto a surface of a resin molded article (see Patent Literatures 3 and 4), a method in which a surface is subjected to blasting (see Patent Literature 5), and the like.

When coating is performed with a matte coating or a light shielding coating, performance and precision may be degraded in some cases. For example, a film having an uneven thickness is formed, or a defect called "ghost" is caused in optical equipment where a thin coating film cannot sufficiently reduce a glossiness and light is reflected on a surface. Further, in some cases, close contact with a coating film cannot be obtained depending on a resin to be used, and a coating film may peel off due to a large change of an environmental temperature. Thus, applicable materials are limited. In addition, when a member has a minute size or a complicated shape, there may be a difficulty in performing coating evenly.

In another case where a metal die is subjected to emboss processing, due to a lack of fluidity of a resin with respect to a fine embossment, the resin does not permeate through the embossment at the time of molding, and sufficient transfer cannot be performed. Thus, applicable materials are limited. Further, for example, maintenance work for the metal die is required in the mass production process on each occasion that the embossment disappears due to abrasion of the metal die. Thus, productivity is not satisfactory.

Moreover, when a molded article surface is roughened by sand blasting, wet blasting, or wet etching to reduce a glossiness, there is a difficulty in manufacturing while controlling a uniform roughening state depending on a part of a product or among a plurality of products. Thus, in some cases, particularly in a case of a precision component, an article itself (particularly, a micro-structure part such as a small diameter part and a thin part) is missing due to the treatment.

In addition, a component for reducing reflection light in optical equipment is required to have a dark color such as black, and hence a lightness L* value is required to be 30 or less at most (see Patent Literature 6).

Meanwhile, a technique described in Patent Literature 7 is known as a technique of forming a groove by irradiating a resin molded article with laser light. Patent Literature 7 describes that a plurality of grooves exposed to an inorganic filler are formed in a resin molded article by laser light irradiation, and also describes that bonding strength is improved due to an anchoring effect exerted by the formed grooves at the time of bonding with another resin molded article. The technique described in Patent Literature 7 is a technique of causing the other resin molded article to enter the grooves formed by laser light irradiation so as to establish bonding therebetween. Therefore, it is not assumed that the surface in which the grooves are formed is finally exposed to the outside. As a matter of course, a glossiness thereof is not to be examined, and the grooves are not provided for the purpose of forming a matte surface.

### Citation List

### Patent Literature

Patent Literature 1: Japanese Unexamined Patent Application Publication No. 2008-251877
Patent Literature 2: Japanese Unexamined Patent Application Publication No. 2017-3897
Patent Literature 3: Japanese Unexamined Patent Application Publication No. H9-33287
Patent Literature 4: Japanese Unexamined Patent Application Publication No. H7-120882
Patent Literature 5: Japanese Unexamined Patent Application Publication No. 2011-59237
Patent Literature 6: Japanese Unexamined Patent Application Publication No. 2018-53063
Patent Literature 7: Japanese Patent No. 5632567
Document JP 2006 316103 A describes a resin molded article having a matte surface according to the preamble of claim 1.

### Summary of Invention

### Technical Problem

As described above, various methods have been proposed as the method for subjecting a resin molded article to low glossiness treatment. Still, due to the problems described above, there is room for improvement.

The present invention has been made in view of the above-mentioned problems in the related art, and has an object to provide a resin molded article having a matte surface that has less limitations on a material and a shape, is easily manufactured, has a low glossiness, and does not peel off, and a method for forming a matte surface on a resin molded article.

### Solution to Problem

In order to solve the above-mentioned problems, one aspect of the present invention is provided below.
(1) A resin molded article having a matte surface, the resin molded article being obtained by molding a thermoplastic resin composition and at least part of the resin molded article having a matte surface having a 60-degree glossiness of 1.5% or less, wherein the matte surface is a flat surface from which an entire surface layer portion is removed by laser light irradiation.
(2) The resin molded article having a matte surface according to (1), wherein the thermoplastic resin composition contains a laser light absorbent the thermoplastic resin composition.
(3) The resin molded article having a matte surface according to (1) or (2), wherein the thermoplastic resin composition further contains a dark colorant.
(4) The resin molded article having a matte surface according to (2) or (3), wherein a content of the laser light absorbent in the thermoplastic resin composition is less than 3 mass%.
(5) The resin molded article having a matte surface according to any one of (1) to (4), wherein a lightness L* value of the matte surface is 30 or less.

### Advantageous Effects of Invention

According to the present invention, there can be provided the resin molded article having a matte surface that has less limitations on a material and a shape, is easily manufactured, has a low glossiness, and does not peel off, and the method for forming a matte surface on a resin molded article.

### Brief Description of Drawings

FIG. 1 is a cross-sectional view schematically illustrating a matte surface of a resin molded article having a matte surface according to the present embodiment.
FIG. 2 is a graph showing a relationship of a 60-degree glossiness with respect to a value of "a groove depth D/ a width W of a projection portion formed between adjacent groove portions of grooves", for each of resin molded articles obtained in Examples and Comparative Examples.

### Description of Embodiments

### <Resin Molded Article having Matte Surface>

A resin molded article having a matte surface according to the present embodiment (hereinafter, also simply referred to as a "resin molded article") is obtained by molding a thermoplastic resin composition, and at least part of the resin molded article has a matte surface having a 60-degree glossiness of 1.5% or less. Further, the matte surface is a flat surface from which an entire surface layer portion is removed by laser light irradiation.

Note that the "flat surface" indicates a surface under a state in which a recess and a projection are absent unlike the recess/projection surface, instead of a surface without a recess and a projection as viewed in a microscopically manner.

In the present embodiment, the matte surface is formed by laser light irradiation, and a 60-degree glossiness is 1.5% or less. In other words, the matte surface is the flat surface from which the entire surface layer portion is removed by laser light irradiation. The recess/proj ection surface or the flat surface is formed by decomposing and subliming the resin by laser light irradiation, and hence can be formed easily for a short time period and does not peel off unlike a matte surface formed with a coating film or the like. Further, a region of the resin molded article where the matte surface is to be formed is irradiated uniformly with laser light. With this, the matte surface having a uniform low glossiness without irregularities can be formed.

The embodiments describing a recess/projection surface having a plurality of grooves are not encompassed by the wording of the claims but useful for understanding the invention.

First, the thermoplastic resin composition is described below.

### [Thermoplastic Resin Composition]

In the present embodiment, the thermoplastic resin composition contains at least a thermoplastic resin and other components as required. Examples of the thermoplastic resin include polyacetal, polybutylene terephthalate, polyethylene terephthalate, polyarylene sulfide, a liquid crystal polymer, polyamide, polycarbonate, polypropylene, an ABS resin, an AS resin, and a PS resin.

In the present embodiment, the grooves are formed by decomposing and subliming the resin, or the surface layer portion is removed by laser light irradiation. Thus, when the thermoplastic resin itself has a low laser light absorption rate (high light transmittance), the resin cannot be removed efficiently, and there may be a difficulty in forming the grooves. In such a case, the thermoplastic resin composition preferably contains a laser light absorbent that generates heat at the time of laser light irradiation. Examples of the laser light absorbent include carbon black, graphite, titanium black, chromium oxide, a cyanine dye having an elongated polymethine skeleton, a phthalocyanine dye mainly having aluminum or zinc, various naphthalocyanine compounds, a nickel dithiolene complex having a planar four-coordination structure, a squarylium dye, a quinone-based compound, a diimonium compound, and an azo compound.

When the resin molded article according to the present embodiment is used as a light shielding member, the resin molded article preferably exhibits a blackish color. Thus, the resin molded article having the matte surface preferably has a lightness L* of 30 or less. In order to obtain the resin molded article described above, for example, a laser light absorbent having a dark color such as black is preferably used as the laser light absorbent added to the thermoplastic resin composition.

In contrast, when the laser light absorbent other than a dark color (for example, a transparent color or a light yellow color) is used, a dark color colorant is used in addition to the laser light absorbent so that the resin molded article having the matte surface has a lightness L* of 30 or less. With this, the resin molded article that exhibits a blackish color can be obtained. Examples of the dark color colorant include an azo pigment, a quinophthalone pigment, an isoindoline pigment, an isoindolinone pigment, a dibromo anthanthrone pigment, a diketopyrrolopyrrole pigment, an anthraquinone pigment, a quinacridone pigment, a perylene pigment, a perynone pigment, a phthalocyanine pigment, and a dioxazine pigment. Note that the dark colorant does not contain the above-mentioned laser light absorbent.

In the present embodiment, in view of securing a physical property of the resin molded article, a content of the laser light absorbent in the thermoplastic resin composition is preferably less than 3 mass%, more preferably, from 0.2 mass% to 1.0 mass%. Particularly, in general, the resin molded article as a light shielding member is used as an insulating member. Thus, in a case where carbon black such as Ketjen black and acetylene black is used as the laser light absorbent, when the content amount thereof is large, the resin molded article may have conductivity and may disadvantageously affect an electric system. In view of this, it is advantageous that the content amount falls within the above-mentioned range.

In the present embodiment, in addition to the above-mentioned components, publicly known additives that are generally added to a thermoplastic resin and a thermosetting resin may be blended without hindering the effects of the present invention. Examples of such additives include a reinforcement material such as glass fibers, a burr inhibitor, a mold releasing agent, a lubricant, a plasticizing agent, a flame retardant, a colorant such as dye and pigment, a nucleating agent, various antioxidants, a thermal stabilizer, a weatherproof stabilizer, and a corrosion inhibitor.

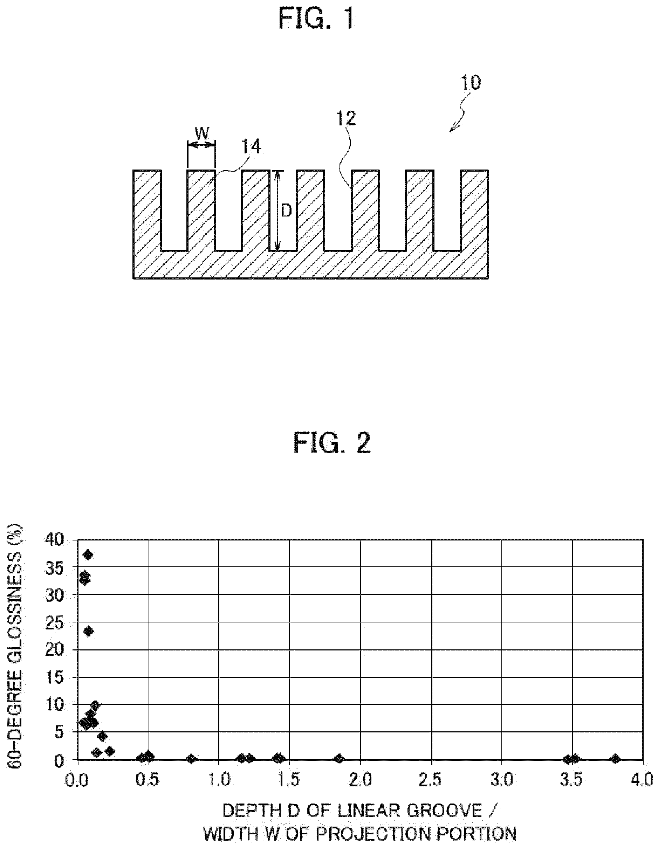

Subsequently, description is made on a relationship between a groove depth (D) and a width (W) of a projection portion formed between adjacent groove portions of the grooves, and a 60-degree glossiness (hereinafter, also simply referred to as a "glossiness") and a lightness of the matte surface when the matte surface is the recess/projection surface having the plurality of grooves in the present embodiment. FIG. 1 schematically illustrates a cross-section of the matte surface of the resin molded article according to the present embodiment. As illustrated in FIG. 1, a matte surface 10 has a plurality of linear grooves 12 that are parallel to one another. A depth of the groove is denoted with D, and a width of a projection portion 14 formed between adjacent groove portions of the grooves is denoted with W. Note that the groove may be a linear groove or a curved groove. Further, a rectangular groove, a circular groove, or the like may be adopted, and a groove having an irregular shape may be adopted. When the groove has a rectangular shape, a circular shape, or an irregular shape, an upper side of an average line of a cross-sectional curved line (a light source side at the time of laser light irradiation) is regarded as the projection portion, and a lower side thereof is regarded as the recess portion at a freely-selected cross-section of a treatment portion. Further, a width of the projection portion at a height of the average line is regarded as a width W, and a height from a top of the projection portion to a bottom of the adjacent recess portion is regarded as a groove depth D. In this case, when a plurality of projection portions and a plurality of recess portions that have different shapes are present, widths of the projection portions are regarded as W1, W2, W3, ... , respectively, and an average value of the widths is regarded as the width W of the projection portion on the recess/projection surface. Similarly, depths of the grooves formed by the recess portions adjacent to the projection portions are regarded as D1, D2, D3, ... , respectively, and an average of the depths is regarded as the groove depth D in the recess/projection surface. Note that the average line referred herein indicates a line obtained by connecting positions having equal average values calculated from heights of the projection portions with the average line as a reference and depths of the recession portions with the average line as a reference that are respectively measured for the projection portions and the recess portions. However, when a large number of recesses and projections are present, and it is difficult to obtain all the average values, the average value may be obtained from a height average value and a depth average value of at least ten recesses and projections according to an average line of a so-called ten-point average roughness.

When the linear grooves are formed as illustrated in FIG. 1, a glossiness of the matte surface tends to be lower as the depth (D) of the groove is greater. Further, a glossiness of the matte surface tends to be lower as the width (W) of the projection portion is smaller. Therefore, a glossiness of the matte surface is lower as a value of a ratio (D/W) of the depth (D) of the groove with respect to the width (W) of the projection portion is greater. Further, a glossiness required for a light shielding member in optical equipment is approximately from 0.5 to 1.5. In order to obtain a glossiness falling within such a range, the value of the ratio (D/W) is preferably 0.2 to 3.5, more preferably, from 0.5 to 2.0, further more preferably, from 0.8 to 1.5.

Meanwhile, even in a case where the value of the ratio (D/W) is 0.2 to 3.5, when the width (W) of the projection portion is a certain value or greater, it is conceived that there may be a difficulty in reducing a glossiness. Thus, the width (W) of the projection portion is preferably 400 µm or less, more preferably, from 50 µm to 350 µm, particularly preferably, from 100 µm to 200 µm. Similarly, the depth (D) of the groove is 150 µm or greater, preferably, 200 µm or greater. The upper limit of the depth (D) of the groove is preferably a half or less of the thickness in view of securing strength of the resin molded article.

Meanwhile, when the resin molded article is used as a light shielding member in optical equipment, a lightness L* value of the matte surface is preferably 30 or less. Further, in a case of the resin molded article having such a dark color, a region that is not subjected to laser light irradiation is, as a matter of course, black, and hence a lightness L* of the projection portion that is not subjected to laser light irradiation is low. In contrast, a lightness L* of the grooves formed by laser light irradiation cannot be generalized. For example, the laser light absorbent having a black color is sublimed by laser light irradiation, and an original color of the thermoplastic resin is exposed. Here, when the depth (D) of the linear groove is shallow, a lightness L* is increased depending on its color. However, as the depth (D) of the groove is deeper, the thermoplastic resin is carbonized at the time of laser light irradiation, which is believed to lead to reduction in a lightness L*. Therefore, a lightness L* of a matte portion hardly depends on the width (W) of the projection portion, but depends on the depth (D) of the groove. In other words, as the depth (D) of the groove is greater, a lightness L* is reduced. Further, a lightness L* required for a light shielding member in optical equipment is approximately from 20 to 30, preferably, 30 or less, more preferably, 25 or less, further preferably, 20 or less, particularly preferably, 15 or less. In order to obtain a lightness L* of such a value, the depth (D) of the groove is preferably 150 µm or greater, more preferably, 200 µm or greater, further more preferably, 250 µm or greater, particularly preferably, 300 µm or greater.

In the present embodiment, examples of the shape (pattern) formed by the plurality of grooves include a lattice shape, stripes, a contour-like shape, a concentric shape, and a combination thereof. Among those, in view of glossiness reduction, a lattice shape is preferred.

The resin molded article according to the present embodiment has the matte surface having a low glossiness, and can be suitably used as a light shielding member in optical equipment when a lightness L* is reduced. In addition to an optical lens and a camera, examples of the optical equipment include a head-up display installed in a cabin of an automobile and an on-board camera meter.

The matte surface of the resin molded article according to the present embodiment described above can be formed by a method for forming a matte surface on a resin molded article according to the present embodiment described below.

### <Method for Forming Matte Surface on Resin Molded Article >

The method for forming a matte surface on a resin molded article according to the present embodiment includes a step of forming the matte surface by irradiating at least a partial region of the resin molded article with laser light and forming the plurality of grooves, the resin molded article being obtained by molding the thermoplastic resin composition. Further, in the step, the plurality of grooves are formed in such a manner that the value of D/W is 0.2 to 3.5, where the depth of the groove is denoted as D and the width of the projection portion formed between the adjacent groove portions of the grooves is denoted as W.

In the method for forming a matte surface on a resin molded article according to the present embodiment, the resin molded article formed of the thermoplastic resin composition is as described above, and description therefor is omitted herein.

In the present embodiment, the matte surface is formed by irradiating at least a partial region of the resin molded article with laser light and forming the plurality of grooves. Here, the recess/projection surface is formed in such a manner that the value of D/W is 0.2 to 3.5, where the depth of the groove is denoted as D and the width of the projection portion formed between the adjacent groove portions of the grooves is denoted as W. In order to adjust the value of the ratio (D/W), it is only required to adjust the depth (D) of the groove and the width (W) of the projection portion as appropriate. In order to set the depth (D) of the groove, it is only required to adjust power of laser light for irradiation, an irradiation time period (scanning speed), and the number of irradiation times as appropriate. For example, in order to form a deeper groove, it is only required to increase at least any one of power of laser light, an irradiation time period, and the number of irradiation times. Further, in order to set the width (W) of the projection portion, it is only required to adjust an interval between the adjacent grooves as appropriate by setting a laser light irradiation diameter and a scanning interval (pitch).

As described above in the section regarding the resin molded article according to the present embodiment, laser light irradiation is performed in such a manner that the depth D of the groove is preferably 150 µm or greater, more preferably, 200 µm or greater.

Similarly, laser light irradiation is performed in such a manner that the width W of the projection portion formed between the adjacent groove portions of the grooves is preferably 400 µm or less, more preferably, from 50 µm to 350 µm.

Note that, when the entire surface layer portion is removed from the flat surface by laser light irradiation, the value of the ratio (D/W) is an infinite value. In other words, the flat surface is formed by irradiating the entire region to be a matte surface with laser light and removing the entire surface layer portion. Further, the thickness of the surface layer portion corresponds to the groove (W), and hence the thickness of the surface layer portion to be removed is preferably 150 µm or greater.

Laser light used in the present embodiment may be freely selected as long as the laser light absorbent is caused to generate heat. In general, a solid-state laser such as a YAG laser and a YVO4 laser, a carbon dioxide gas laser, a semiconductor laser, and a fiber laser may be used.

In the present embodiment, laser light scans in a linear movement so as to form the grooves, and hence aa laser marking device that is commercially available may be used. In this case, it is preferred that laser light output, a scanning speed, a laser diameter, and the like be adjusted in such a manner that the laser light absorbent irradiated with laser light generates heat to sublime and decompose the peripheral thermoplastic resin and form the grooves.

In the present embodiment, a surface of the recess portion is subjected to Raman spectroscopy to determine whether the grooves are formed by laser light irradiation. With this, when presence of a carbonized layer on the resin is confirmed, it can be determined that the grooves are formed by laser light irradiation.

In the present embodiment, when a filler such as glass fibers is contained in the thermoplastic resin composition, it is preferred that the filler exposed in the groove be sublimed (decomposed) by laser light irradiation and be removed. This is because an undesired effect such as degradation in performance of a product. Specifically, when such a filler remains, the filler contained in a part where the resin disappears adheres to the groove surface. Alternatively, when such a filler is exposed to the groove surface, a glossiness of the matte surface may be increased, or the exposed filler may come off and adhere to a lens, depending on a type of the filler.

As described above, in the method according to the present embodiment, the matte surface can be formed by irradiating the resin molded article with laser light, and a coating film, which is formed at the time of coating with a matte coating, does not peel off. Further, the resin molded article is irradiated with laser light, which does not require maintenance work for a metal die in emboss processing. Further, uniform laser light irradiation easily achieves a uniform glossiness of the matte surface.

### Examples

The present embodiment is described below more specifically with reference to Examples, but the present embodiment is not limited to Examples given below.

### [Example 1]

A polybutylene terephthalate resin composition containing carbon black (laser light absorbent) by 0.5 mass% was used, and a resin molded article having a shape of 100 mm × 100 mm × 3 mm was obtained by injection molding. The article thus obtained was irradiated with laser light under the following conditions, and a matte surface was formed.

### (Laser Light Irradiation Conditions)

Laser irradiation device: a laser marker, MD-X1520 produced by KEYENCE CORPORATION (wavelength: 1064 nm)
Treatment pattern: a lattice shape
Laser diameter: 80 µm
Laser output: 12.5 (W)
Scanning speed: 400 (mm/sec)
Frequency: 10 kHz
Number of irradiation times with respect to one linear groove: one

A depth (D) of a groove and a width (W) of a projection portion that were formed were measured by a microscope VW-9000 produced by KEYENCE CORPORATION. The measurement results are shown in Table 1.

### <Evaluation>

Subsequently, a 60-degree glossiness and a lightness L* value of the matte surface thus formed were measured in the following manner.

### (1) Measurement of 60-degree Glossiness

a handy glossmeter PG-II (60 degrees) produced by DENSHOKU INDUSTRIES Co., Ltd., was used to perform measurement according to JIS-Z-8741. The measurement results are shown in Table 1.

### (2) Measurement of Lightness L* Value

An SM-P type color computer produced by Suga Test Instruments Co., Ltd., was used to perform measurement. The measurement results are shown in Table 1.

**[Table 1]**

| | Material | Number of laser light irradiation times | Depth of linear groove (*µ* m) | Width of projection portion (*µ* m) | Depth (D) of linear groove / width (W) of projection portion | 60-degree glossiness (%) | L* value |
|---|---|---|---|---|---|---|---|
| Example 1 | PBT | 1 | 25 | 84 | 0.30 | 1.5 | 24.6 |
| Example 2 | PBT | 5 | 99 | 69 | 1.44 | 0.2 | 33.0 |
| Example 3 | PBT | 10 | 145 | 123 | 1.17 | 0.2 | 18.6 |
| Example 4 | PBT | 10 | 151 | 40 | 3.80 | 0.2 | 20.4 |
| Example 5 | PBT | 15 | 186 | 53 | 3.52 | 0.2 | 20.0 |
| Example 6 | PBT+GF | 1 | 59 | 130 | 0.46 | 0.3 | 25.0 |
| Example 7 | PBT+GF | 5 | 182 | 157 | 1.16 | 0.1 | 15.1 |
| Example 8 | PBT+GF | 10 | 157 | 111 | 1.41 | 0.1 | 13.5 |
| Example 9 | PBT+GF | 10 | 207 | 170 | 1.22 | 0.1 | 13.2 |
| Example 10 | PBT+GF | 10 | 120 | 370 | 0.32 | 1.2 | 16.2 |
| Example 11 | PBT+GF | 15 | 296 | 160 | 1.85 | 0.1 | 12.1 |
| Example 12 | PPS+GF | 30 | 412 | 119 | 3.47 | 0.1 | 10.8 |
| Example 13 | PPS+GF | 30 | 283 | 350 | 0.81 | 0.1 | 8.3 |
| Example 14 | PPS+GF | 30 | 293 | 570 | 0.51 | 0.4 | 8.0 |
| Example 15 | PPS+GF | 30 | 393 | 780 | 0.50 | 0.7 | 8.0 |
| Example 16 | PPS+GF | 10 | 174 | 0 | Infinite value | 0.2 | 22.1 |
| Example 17 | PPS+GF | 20 | 483 | 0 | Infinite value | 0.1 | 16.1 |
| Example 18 | PPS+GF | 30 | 793 | 0 | Infinite value | 0 | 8.0 |
| Example 19 | PPS+GF | 40 | 715 | 0 | Infinite value | 0 | 8.8 |
| Comparative Example 1 | PBT | No treatment | - | - | - | 98.3 | 8.8 |
| Comparative Example 2 | PBT+GF | No treatment | - | - | - | 47.1 | 21.7 |
| Comparative Example 3 | PPS+GF | No treatment | - | - | - | 96.5 | 17.2 |
| Comparative Example 4 | PBT | 10 | 33 | 277 | 0.12 | 9.7 | 23.3 |
| Comparative Example 5 | PBT | 10 | 37 | 507 | 0.07 | 23.3 | 22.2 |
| Comparative Example 6 | PBT | 10 | 51 | 723 | 0.07 | 37.3 | 20.4 |
| Comparative Example 7 | PBT | 20 | 28 | 257 | 0.11 | 8.8 | Not measured |
| Comparative Example 8 | PBT | 20 | 35 | 730 | 0.05 | 33.5 | Not measured |
| Comparative Example 9 | PBT | 30 | 28 | 287 | 0.09 | 8.3 | Not measured |
| Comparative Example 10 | PBT | 30 | 35 | 683 | 0.05 | 32.8 | Not measured |
| Comparative Example 11 | PBT+GF | 10 | 104 | 607 | 0.17 | 4.1 | 17.3 |
| Comparative Example 12 | PBT+GF | 10 | 67 | 817 | 0.08 | 7.1 | 17.8 |
| Comparative Example 13 | PBT+GF | 20 | 30 | 893 | 0.04 | 8.7 | Not measured |
| Comparative Example 14 | PBT+GF | 30 | 45 | 760 | 0.08 | 8.2 | Not measured |

### [Examples 2 to 5]

A matte surface was formed similarly to Example 1 except that the number of laser light irradiation times was changed to the number shown in Table 1 and a width of a projection portion was changed to the width shown in Table 1 by changing a width of adjacent grooves, and the matte surface thus formed was evaluated similarly to Example 1. The evaluation results are shown in Table 1.

### [Examples 6 to 11]

A polybutylene terephthalate resin composition containing carbon black (laser light absorbent) by 0.5 mass% and glass fibers by 30 mass% was used, and an article having a shape of 100 mm × 100 mm × 3 mm was obtained by injection molding. Similarly to Example 1, the article thus obtained was irradiated with laser light, and a matte surface was formed. However, a scanning speed of laser light was set to 200 mm/sec. Further, similarly in Example 1, the matte surface was evaluated. The evaluation results are shown in Table 1.

### [Examples 12 to 15]

A polyphenylene sulfide resin composition containing carbon black (laser light absorbent) by 0.5 mass% and glass fibers by 40 mass% was used, and an article having a shape of 100 mm × 100 mm × 3 mm was obtained by injection molding. Similarly to Example 1, the article thus obtained was irradiated with laser light, and a matte surface was formed. However, output of laser light was set to 22.5W, and a scanning speed of laser light was set to 200 mm/sec. Further, similarly in Example 1, the matte surface was evaluated. The evaluation results are shown in Table 1.

### [Examples 16 to 19]

A matte surface was formed similarly to Example 12 except that the number of laser light irradiation times was set to the number shown in Table 1 and a matte surface was obtained by irradiating an entire surface layer portion, which corresponds to a region to be the matte surface, with laser light and removing the surface layer portion. Further, similarly in Example 1, the matte surface was evaluated. The evaluation results are shown in Table 1.

### [Comparative Examples 1 to 3]

In each of Comparative Examples, a resin molded article was obtained similarly to Examples 1 to 3 except for laser light irradiation was not performed (a matte surface was not formed). Further, similarly to Example 1, a surface of the resin molded article was evaluated. The evaluation results are shown in Table 1.

### [Comparative Examples 4 to 10]

A matte surface was formed similarly to Example 1 except that the number of laser light irradiation times was changed to the number shown in Table 1 and a width of a projection portion was changed to the width shown in Table 1 by changing a width of adjacent grooves, and the matte surface thus formed was evaluated similarly to Example 1. The evaluation results are shown in Table 1.

### [Comparative Examples 11 to 14]

A matte surface was formed similarly to Example 6 except that the number of laser light irradiation times was changed to the number shown in Table 1 and a width of a projection portion was changed to the width shown in Table 1 by changing a width of adjacent grooves, and the matte surface thus formed was evaluated similarly to Example 1. The evaluation results are shown in Table 1.

At the same time, the graph of FIG. 2 shows a relationship of a glossiness with respect to the value of the ratio (D/W) of the depth (D) of the groove to the width (W) of the projection portion in each of Examples (except for Examples 16 to 19) and Comparative Examples. It can be understood that, from FIG. 2, a glossiness was reduced when the value of the ratio (D/W) was 0.2 or greater.

Each of Examples 1 to 19 is an example in which the grooves were formed or the entire surface layer portion was removed by laser light irradiation, and it can be understood that, from Table 1, the matte surface having a glossiness of 1.5% or less was formed. Further, except for Example 2, a lightness L* value of the matte surface was 30 or less. It is considered that, in Example 2, carbon black was sublimed by laser light irradiation to expose the original color of the resin. Further, in Example 3 and the like in which the number of laser light irradiation times was greater than that in Example 2, it is assumed that carbon black was carbonized to reduce a lightness L* value. Thus, energy of laser light was required to obtain a deeper groove, and it is considered that carbon black was carbonized as a result of this.

In contrast, in each of Comparative Examples 1 to 3, laser light irradiation was not performed, in other words, a matte surface was not formed. As a result, as a matter of course, a glossiness was high. Further, in each of Comparative Examples 4 to 6, the value of the ratio (D/W) of the depth (D) of the groove with respect to the width (W) of the projection portion formed between the adjacent groove portions of the grooves was less than 0.2. As a result, a glossiness was high.

## Claims

1. A resin molded article having a matte surface, the resin molded article being obtained by molding a thermoplastic resin composition and at least part of the resin molded article having a matte surface having a 60-degree glossiness, determined according to JIS-Z-8741, of 1.5% or less, **characterized in that** the matte surface is a flat surface from which an entire surface layer portion is removed by laser light irradiation.

2. The resin molded article having a matte surface according to claim 1, wherein the thermoplastic resin composition contains a laser light absorbent.

3. The resin molded article having a matte surface according to claim 1 or 2, wherein the thermoplastic resin composition further contains a dark colorant.

4. The resin molded article having a matte surface according to claim 2 or 3, wherein a content of the laser light absorbent in the thermoplastic resin composition is less than 3 mass%.

5. The resin molded article having a matte surface according to any one of claims 1 to 4, wherein a lightness L* value, determined as described in the specification, of the matte surface is 30 or less.

## Patentansprüche

1. Harzformkörper mit einer matten Oberfläche, wobei der Harzformkörper durch Formen einer thermoplastischen Harzzusammensetzung erhalten wird und mindestens ein Teil des Harzformkörpers eine matte Oberfläche mit einem 60-Grad-Glanz, bestimmt gemäß JIS-Z-8741, von 1,5 % oder weniger aufweist, **dadurch gekennzeichnet, dass**
die matte Oberfläche eine ebene Oberfläche ist, von der ein ganzer Oberflächenschichtanteil durch Laserlichtbestrahlung entfernt wurde.

2. Harzformkörper mit einer matten Oberfläche gemäß Anspruch 1, wobei die thermoplastische Harzzusammensetzung einen Laserlichtabsorber enthält.

3. Harzformkörper mit einer matten Oberfläche gemäß Anspruch 1 oder 2, wobei die thermoplastische Harzzusammensetzung außerdem ein dunkles Farbmittel enthält.

4. Harzformkörper mit einer matten Oberfläche gemäß Anspruch 2 oder 3, wobei der Gehalt des Laserlichtabsorbers in der thermoplastischen Harzzusammensetzung weniger als 3 Masse-% beträgt.

5. Harzformkörper mit einer matten Oberfläche gemäß einem der Ansprüche 1 bis 4, wobei der wie in der Beschreibung beschrieben bestimmte Helligkeitswert L* der matten Oberfläche 30 oder weniger beträgt.

## Revendications

1. Article moulé en résine ayant une surface mate, l'article moulé en résine étant obtenu par le moulage d'une composition de résine thermoplastique et au moins une partie de l'article moulé en résine ayant une surface mate présentant une brillance à 60 degrés, déterminée selon JIS-Z-8741, de 1,5 % ou moins, **caractérisé en ce que**
la surface mate est une surface plate de laquelle une partie de couche de surface complète est éliminée par irradiation de lumière laser.

2. Article moulé en résine ayant une surface mate selon la revendication 1, dans lequel la composition de résine thermoplastique contient un absorbant de lumière laser.

3. Article moulé en résine ayant une surface mate selon la revendication 1 ou 2, dans lequel la composition de résine thermoplastique contient en outre un colorant foncé.

4. Article moulé en résine ayant une surface mate selon la revendication 2 ou 3, dans lequel une teneur en absorbant de lumière laser dans la composition de résine thermoplastique est inférieure à 3 % en masse.

5. Article moulé en résine ayant une surface mate selon l'une des revendications 1 à 4, dans lequel une valeur de luminosité L*, déterminée comme cela est décrit dans le mémoire, de la surface mate est 30 ou moins.
